# Europäisches Patentamt

# European Patent Office

# Office européen des brevets

(19)

(11) Veröffentlichungsnummer: **0 082 436**
**B1**

(12) ## EUROPÄISCHE PATENTSCHRIFT

(45) Veröffentlichungstag der Patentschrift:
**10.12.86**

(51) Int. Cl.⁴: **B 60 N 1/02,** B 60 N 1/06

(21) Anmeldenummer: **82111439.4**

(22) Anmeldetag: **10.12.82**

(54) **Fahrzeugsitz, insbesondere Kraftfahrzeugsitz.**

(30) Priorität: **23.12.81 DE 3151018**
**30.04.82 DE 3216060**

(43) Veröffentlichungstag der Anmeldung:
**29.06.83 Patentblatt 83/26**

(45) Bekanntmachung des Hinweises auf die Patenterteilung:
**10.12.86 Patentblatt 86/50**

(84) Benannte Vertragsstaaten:
**DE FR GB IT**

(56) Entgegenhaltungen:
**DE - A - 1 580 621**
**DE - A - 2 046 450**
**FR - A - 2 052 721**
**FR - A - 2 097 577**
**FR - A - 2 403 909**
**GB - A - 1 168 927**

(73) Patentinhaber: **KEIPER RECARO GmbH & Co.,**
**Büchelstrasse 54-58, D-5630 Remscheid 14 (DE)**

(72) Erfinder: **Göldner, Walther, Dipl. Ing., Fichtenweg 7,**
**D-7306 Denkendorf (DE)**
Erfinder: **Gassmann, Wolfgang, Sonnenweg 6,**
**D-7073 Lorch (DE)**

(74) Vertreter: **Patentanwälte Phys. Bartels Dipl.-Ing. Fink**
**Dr.-Ing. Held, Lange Strasse 51, D-7000 Stuttgart 1 (DE)**

ACTORUM AG

## Beschreibung

Die Erfindung betrifft einen Fahrzeugsitz, insbesondere Kraftfahrzeugsitz, mit wenigstens einer gepolsterten Seitenwange, die seitlich neben der Sitzpolsterung angeordnet, um eine in Sitzquerrichtung verlaufende Achse schwenkbar mit dem Polsterträger des Sitzes verbunden und zumindest in zwei unterschiedlichen Schwenkstellungen mittels einer Verbindungseinrichtung feststellbar ist.

Ausser Fahrzeugsitzen, deren Seitenwangen um eine in Längsrichtung des Sitzteiles oder der Rückenlehne sich erstreckende Achse schwenkbar sind und die einen von der Schwenkstellung der Seitenwangen abhängigen Platzbedarf des Sitzes in Sitzquerrichtung haben, ist ein Fahrzeugsitz der vorstehend genannten Art bekannt (DE-A 20 46 450). Bei diesem bekannten Fahrzeugsitz sind die beiden seitlich neben dem Sitzteil angeordneten Seitenwangen im Bereich ihres vorderen Endes über die Schwenkachse mit dem Polsterträger des Sitzteils verbunden. Die zugeordnete Verriegelungseinrichtung, mittels deren die Seitenwange in den beiden Endstellungen des Schwenkbereiches feststellbar ist, besteht aus einer Rolle, die auf einem am hinteren Ende des Polsterträgers der Seitenwange parallel zur Schwenkachse befestigten Zapfen drehbar gelagert ist, und einer aus einer Blattfeder geformten oder schwenkbar am Polsterträger des Sitzes gelagerten, federbelasteten Rastschiene. Das Betätigungsglied, mittels dessen diese Rastschiene in eine Entriegelungsstellung bewegbar ist, weist einen neben der Aussenseite der Seitenwange schräg nach vorne und oben verlaufenden Stab auf, der einstückig mit einer parallel zu Schwenkachse am hinteren Ende des Polsterträgers des Sitzteils gelagerten Schwenkwelle ausgebildet ist. Auch die Rückenlehne ist seitlich mit je einer Seitenwange versehen, die um eine in Sitzquerrichtung verlaufende Achse schwenkbar mit dem Polsterträger der Rückenlehne verbunden sind. Im Bereich des unteren Endes des Polsterträgers der neben der Rückenlehne angeordneten Seitenwange ist das eine Ende eines Stabes angelenkt, dessen anderes Ende gelenkig mit dem hinteren Ende des Polsterträgers der auf der gleichen Seite neben dem Sitzteil angeordneten Seitenwange verbunden ist. Hierdurch bewirkt eine Schwenkbewegung der neben dem Sitzteil angeordneten Seitenwange nach oben eine Schwenkbewegung der neben der Rückenlehne angeordneten Seitenwangen nach vorne und umgekehrt. Dies hat nicht nur zur Folge, dass die Seitenwangen der Rückenlehne nicht unabhängig von denjenigen des Sitzteils eingestellt werden können und die Wahl einer zwischen den Endstellungen liegenden Stellung nicht möglich ist. Es ist ausserdem in der Regel nicht erforderlich, den Sitzbenutzer im Hüftbereich sowohl durch Seitenwangen der Rückenlehne als auch durch Seitenwangen des Sitzteils zu stützen. Vor allem aber vergrössert das Betätigungsglied bei diesem bekannten Sitz den Platzbedarf des Sitzes in Sitzquerrichtung, weil nicht nur Platz für die neben der Seitenwange liegende Stange benötigt wird, sondern auch für die Hand zum Ergreifen des vorderen Endes der Stange.

Der Erfindung liegt daher die Aufgabe zugrunde, einen Fahrzeugsitz, insbesondere für Kraftfahrzeuge, mit wenigstens einer gepolsterten, seitlich neben dem Sitz angeordneten verstellbaren Seitenwange zu schaffen, der eine optimale Ausnutzung des im Fahrzeug in dessen Querrichtung für den Sitz zur Verfügung stehenden Raumes erlaubt, bei dem aber dennoch die Seitenwangenverstellung bequem auszuführen ist.

Diese Aufgabe lösen Fahrzeugsitze mit den Merkmalen der unabhängigen Ansprüche 1 bis 4.

Bei allen diesen Lösungen kann der im Fahrzeug in Sitzquerrichtung vorhandene Raum vollständig für den Sitz und die Seitenwange oder Seitenwangen genutzt werden, da die Breite des Sitzes unabhängig von der Seitenwangeneinstellung ist und vor allem kein zusätzlicher Platzbedarf in Sitzquerrichtung für ein Betätigungsglied vorhanden ist. Falls nicht auf ein Betätigungsglied verzichtet wird, weil sich die Seitenwange als Ganzes zum Öffnen und Schliessen der Verriegelungseinrichtung verschieben lässt, ist nämlich eine Anordnung des Betätigungsgliedes in der Weise möglich, dass es vom vorderen bzw. unteren Ende der Seitenwange her erfasst werden kann, sofern eine Betätigung nicht durch einen Druck auf die Polsterung der Seitenwange im Bereich von deren freiem Ende genügt. Da ein am vorderen bzw. unteren Ende der Seitenwange vorgesehenes Betätigungsglied vom Sitzbenutzer leicht zu erreichen ist und auch das Lösen der Verriegelungseinrichtung durch eine Druckbelastung der Polsterung der Seitenwange oder eine Längsverschiebung der Seitenwange mühelos auszuführen ist, erfüllen die erfindungsgemässen Lösungen auch die Forderung einer bequemen Verstellbarkeit.

Damit ein vorhandenes Betätigungsglied praktisch nicht in Erscheinung tritt, kann es gemäss Anspruch 5 in einer nur zum freien Ende der Seitenwange hin offenen Vertiefung von deren Polster angeordnet sein.

Der Betätigungskomfort der Seitenwange lässt sich noch weiter durch eine Ausgestaltung der Verriegelungseinrichtung gemäss Anspruch 6 erhöhen, weil dann in der einen Schwenkrichtung nicht zunächst das Betätigungsglied betätigt oder die Seitenwange im Sinne eines Öffnens der Verriegelungseinrichtung verschoben werden muss, ehe die Schwenkbewegung ausgeführt werden kann. Der Benutzer braucht also beispielsweise nur für eine Absenkung der seitlich neben dem Sitzteil angeordneten Seitenwange zunächst das Betätigungsglied zu betätigen, nicht hingegen für eine Anhebung.

Vorteilhaft wegen ihrer konstruktiven Einfachheit und damit ihres geringen Platzbedarfes sind Ausgestaltungen des Betätigungsgliedes und der Verriegelungseinrichtung gemäss den Ansprüchen 7 bis 11. Hiermit lässt sich zwar keine stufenlose Verstellung der Seitenwange erzielen. Jedoch sind die realisierbaren Stufen ausreichend klein. Die Ausgestaltung gemäss Anspruch 8 ist dabei auch insofern vorteilhaft, als sie eine Hin- und Herbewegung der Handhabe des Betätigungsgliedes während der Verstellung der Seitenwange verhindert.

Sofern das Betätigungsglied als eine im Polster der Seitenwange angeordnete Blattfeder ausgebildet ist, ist es zweckmässig, diese Blattfedern nicht direkt, sondern mittels einer in die Seitenwange integrierten Druckplatte zu betätigen.

Im folgenden ist die Erfindung anhand von in der Zeichnung dargestellten Ausführungsbeispielen im einzelnen erläutert. Es zeigen:

Fig. 1 eine unvollständig und teilweise aufgebrochen dargestellte Seitenansicht eines ersten Ausführungsbeispiels,

Fig. 2 einen Schnitt nach der Linie II–II der Fig. 1,

Fig. 3 eine Draufsicht auf die in Fig. 1 dargestellte Seitenwange bei abgenommenem Polster sowie auf den die Seitenwange tragenden Teil des Sitzgestells,

Fig. 4 einen vergrössert dargestellten Ausschnitt aus Fig. 1,

Fig. 5 eine unvollständig und teilweise in Längsrichtung geschnitten dargestellte Ansicht einer Abwandlung des ersten Ausführungsbeispiels,

Fig. 6 eine unvollständig dargestellte Seitenansicht eines zweiten Ausführungsbeispiels,

Fig. 7 einen Schnitt nach der Linie VII–VII der Fig. 6,

Fig. 8 eine unvollständig dargestellte Seitenansicht einer Abwandlung des zweiten Ausführungsbeispiels,

Fig. 9 einen Längsschnitt durch die in Fig. 8 dargestellte Seitenwange bei abgenommenem Polster,

Fig. 10 eine unvollständig dargestellte Seitenansicht eines dritten Ausführungsbeispiels,

Fig. 11 eine unvollständig dargestellte Seitenansicht eines vierten Ausführungsbeispiels,

Fig. 12 einen Längsschnitt durch die in Fig. 11 dargestellte Seitenwange und eine unvollständig dargestellte Ansicht des diese Seitenwange tragenden Polsterträgers der Rückenlehne,

Fig. 13 einen Längsschnitt durch ein fünftes Ausführungsbeispiel nach der Linie XIII–XIII der Fig. 14,

Fig. 14 eine Draufsicht auf das fünfte Ausführungsbeispiel,

Fig. 15 einen Schnitt nach der Linie XV–XV der Fig. 13,

Fig. 16 einen vergrössert dargestellten Ausschnitt der Fig. 13.

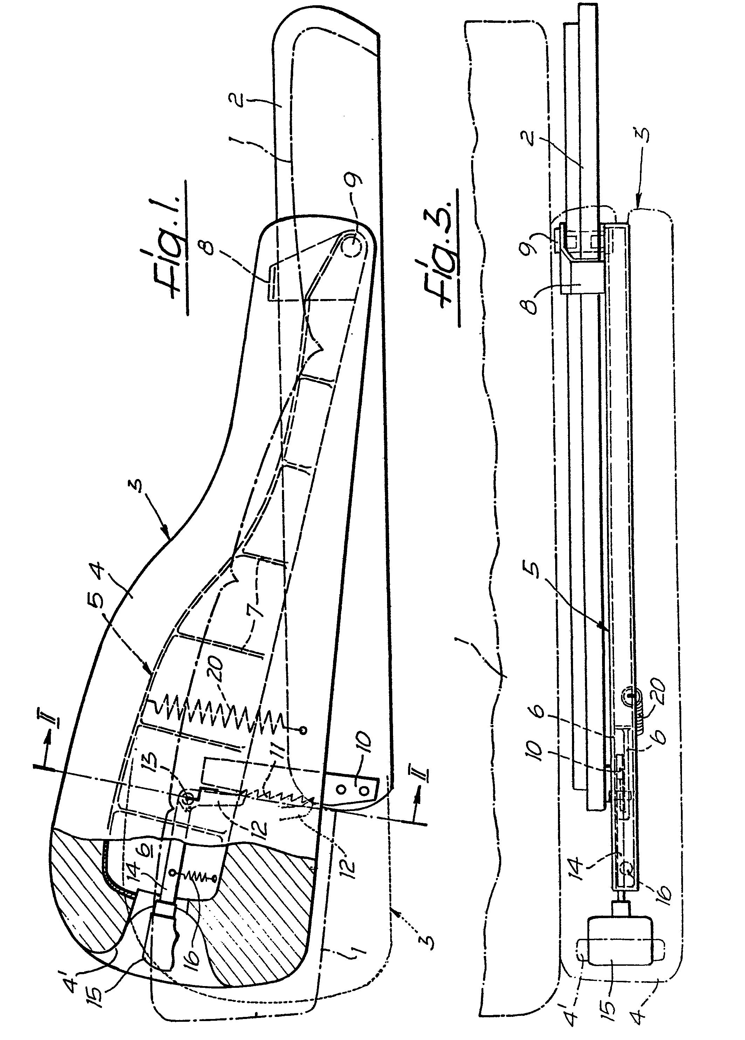

Bei dem in den Fig. 1 bis 4 dargestellten Ausführungsbeispiel handelt es sich um einen Kraftfahrzeugsitz, von dem nur sein Sitzteilpolster 1, der eine Längsholm 2 des das Sitzteilpolster tragenden Polsterträgers und eine als Ganzes mit 3 bezeichnete Seitenwange des Sitzteils dargestellt sind. Die nicht dargestellte, andere Seitenwange des Sitzteils, welche auf der anderen Seite des Sitzteils vorgesehen ist, ist im Ausführungsbeispiel bezüglich der Seitenwange 3 spiegelbildlich gleich ausgebildet und angeordnet. Sie könnte aber auch eine andere Ausbildung und Anordnung haben, beispielsweise unverstellbar mit dem Polsterträger des Sitzteilpolsters oder dem Sitzgestell verbunden sein, wenn eine Verstellbarkeit der auf der Sitzaussenseite liegenden Seitenwange 3 genügt, um das Aus- und Einsteigen zu erleichtern und die Sitzbreite sowie die seitliche Abstützung zu verändern.

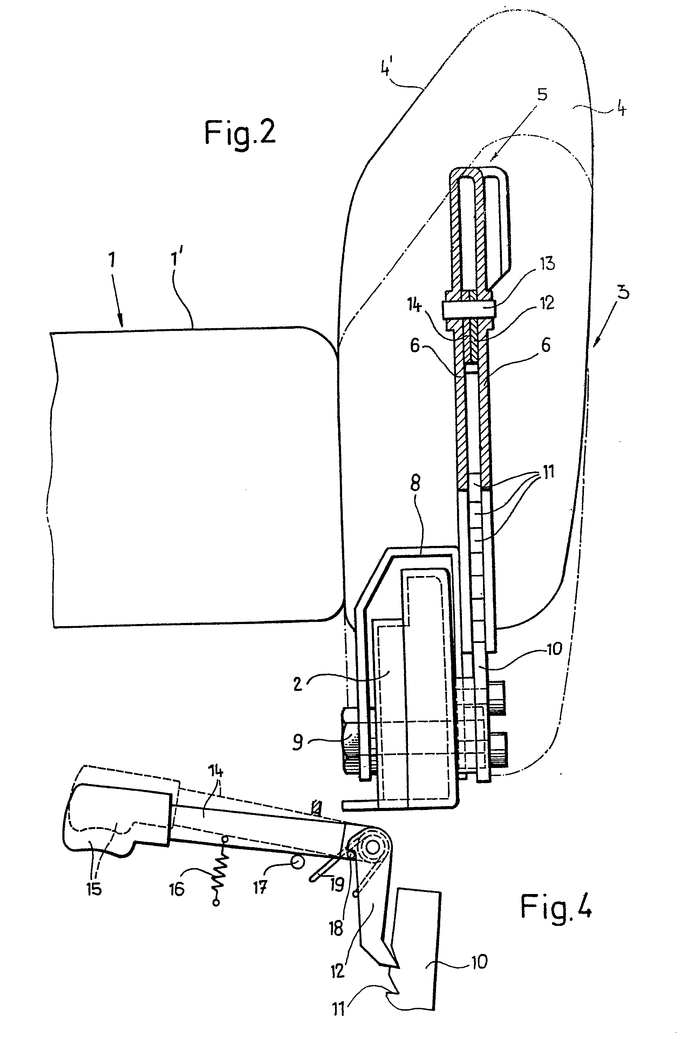

Die Seitenwange 3 weist, wie Fig. 2 zeigt, ein Polster 4 auf, dessen äussere Querschnittskontur sich von einem hochkant stehenden Rechteck mit abgerundeten Ecken im wesentlichen dadurch unterscheidet, dass der Bereich der oberen, innenliegenden Ecke fehlt. Hierdurch schliesst der obere Teil 4' der inneren Seitenfläche mit der Schwenkebene, in welcher der untere Teil dieser Seitenfläche liegt, einen spitzen Winkel und mit der angrenzenden Anlagefläche 1' des Sitzpolsterteils 1 einen stumpfen Winkel ein. Der Übergang vom oberen Teil 4' der Seitenfläche zum unteren Teil liegt in Höhe der Anlagefläche 1', wenn die Seitenwange in ihrer tiefsten Stellung steht, in der sie den kleinsten Überstand über die Anlagefläche 1' hat, könnte aber auch etwas tiefer oder etwas höher liegen. Diese Position ist in Fig. 2 mit strichpunktierten Linien dargestellt. In dieser Stellung hat die dem Sitzbenutzer zur Verfügung stehende Sitzbreite ihr Maximum. In ihrer höchsten Stellung nimmt die Seitenwange 3 die in Fig. 2 mit ausgezogenen Linien dargestellte Position ein. Die dem Sitzbenutzer zur Verfügung stehende Sitzbreite hat hierbei ihren kleinsten Wert. Die elastische Nachgiebigkeit des Polsters 4 in Sitzquerrichtung ist jedoch so gross, dass sich das Polster an die Form des Oberschenkels des Sitzbenutzers anpassen kann. Daher tritt auch der im unbelasteten Zustand des Polsters 4 am Übergang vom Teil 4' der inneren Seitenfläche zum unteren Teil dieser Seitenfläche vorhandene Knick nicht störend in Erscheinung, sondern verschwindet mehr oder weniger vollständig bei einer Belastung. Der Platzbedarf des Sitzes in Querrichtung wird durch eine Veränderung der Position der Seitenwange 3 zum Zwecke der Änderung der Sitzbreite nicht verändert, was von erheblichem Vorteil ist.

Die Höhe des Polsters 4 ist, wie Fig. 1 zeigt, im Ausführungsbeispiel in der vorderen Hälfte etwa doppelt so gross wie in der hinteren Hälfte. Dadurch hat die Verstellung der Seitenwange 3 praktisch nur in ihrer vorderen Hälfte eine Auswirkung auf die dem Sitzbenutzer zur Verfügung stehende Sitzbreite und seine seitliche Abstützung. Ferner sind im Ausführungsbeispiel die Seitenwange 3 und ihr Schwenkbereich so gewählt, dass das Polster 4 in seiner vorderen Hälfte auch in der tiefsten Stellung der Seitenwange noch über die Anlagefläche 1' übersteht. Selbstverständlich könnte aber auch in der tiefsten Stellung der Seitenwange die Oberseite des Polsters 4 in der von der Anlagefläche 1' des Sitzpolsterteils 1 definierten Fläche liegen, damit der Sitz nur verbreitert wird und dem Sitzbenutzer keine seitliche Abstützung mehr gibt.

Im Inneren des Polsters 4 befindet sich ein Polsterträger 5, der im Ausführungsbeispiel aus Kunststoff besteht, jedoch auch ein Metallkörper sein könnte. Der Polsterträger 5 weist zwei in geringem Abstand nebeneinanderliegende, ebene Platten 6 auf, die sich in Richtung der Höhe und der Länge des Polsters 4 erstrecken und deshalb im Ausführungsbeispiel in vertikalen Ebenen liegen. Die beiden Platten 6, deren Höhe gegen ihr hinteres Ende hin abnimmt, sind längs ihres oberen Randes durch ein Stegteil einstückig miteinander ausgebildet. Sich von oben nach unten erstreckende und im Abstand voneinander angeordnete Rippen 7 verbinden zusätzlich die beiden Platten 6 und bilden nach unten offene Taschen.

Das hintere Ende der dem Sitzteil zugewandten Platte 6 ist mit dem einen Schenkel eines U-förmigen Lagerkörpers 8 verbunden, welcher von oben her den Längsholm 2 übergreift. Eine die beiden Schenkel des Lagerkörpers 8 sowie den Längsholm 2 in Sitzquerrichtung durchdringende Schraube 9 bildet eine Schwenkachse, um welche die Seitenwange 3 schwenkbar ist. Die Schwenkbewegung der Seitenwange 3 erfolgt im Ausführungsbeispiel also in einer vertikalen, parallel zur Sitzlängsrichtung liegenden Ebene.

Im Bereich des vorderen Endes des Längsholms 2 ist an diesem das untere Ende einer nach oben weisenden Schiene 10 befestigt, welche spielfrei oder höchstens mit einem geringen Spiel zwischen die beiden Platten 6 im Bereich einer der von den Rippen 7 gebildeten Taschen eingreift, und zwar im Bereich des vorderen Endabschnitts des Polsterträgers 5. Letzterer wird deshalb bei einer Schwenkbewegung nicht nur von der Schraube 9, sondern auch von der Schiene 10 geführt. Ausserdem nimmt die Schiene 10 Querkräfte, welche auf die Seitenwange 3 ausgeübt werden, auf und leitet sie in den Längsholm 2 ein.

Der vordere Rand der Schiene 10 ist, wie Fig. 1 zeigt, als eine Zahnstange ausgebildet, deren Zähne 11 ein Sägezahnprofil haben. Die obere Flanke der Zähne 11 steht dabei lotrecht auf der Längsrichtung der Schiene 10, während die untere Flanke einen spitzen Winkel mit der Schienenlängsrichtung einschliesst.

Dank der Zähne 11 bildet die Schiene 10 auch eine Rastschiene einer Verriegelungseinrichtung, mittels deren die Seitenwange 3 in den wählbaren Schwenkstellungen festgestellt werden kann. Diese Verriegelungseinrichtung weist als mit der Schiene 10 zusammenwirkendes Glied eine Klinke 12 auf, die schwenkbar auf einem parallel zur Schraube 9 liegenden, in den Platten 6 festgelegten Stift 13 gelagert ist und sich von hier aus nach unten erstreckt sowie mit ihrem abgewinkelten, freien Ende zwischen die Zähne 11 eingreift. Auf dem Stift 13 ist neben der Klinke 12 ein flacher Betätigungshebel 14 gelagert, der vorne aus dem Polsterträger 5 herausragt und hier eine Handhabe 15 trägt. Damit der Sitzbenutzer diese Handhabe erfassen und entgegen der Kraft einer am Betätigungshebel 14 angreifenden Rückstellfeder 16 nach oben ziehen kann, dass aber andererseits die Handhabe 15 nicht störend in Erscheinung tritt, weist, wie Fig. 1 zeigt, das Polster 4 in seiner Vorderseite eine nur nach vorne offene Vertiefung 4' auf, in welcher die Handhabe 15 gut zugänglich liegt. Wie Fig. 4 zeigt, wird der Schwenkbereich des Betätigungshebels 14 nach unten durch einen Anschlagstift 17 begrenzt. Bei einer Schwenkbewegung nach oben nimmt ein Mitnehmerstift 18, der dabei an einer Nase der Klinke 12 anliegt, diese entgegen der Kraft einer Schenkelfeder 19 mit, welche die Klinke 12 in Eingriff mit den Zähnen 11 zu halten sucht. Infolge des Sägezahnprofils der Zähne 11 kann die Seitenwange 3 nur nach unten geschwenkt werden, nachdem zuvor die Handhabe 15 nach oben gezogen worden ist, wobei der Sitzbenutzer zweckmässigerweise die Hand auf die Oberseite des Polsters 4 auflegt. Eine einerseits am Längsholm 2 und andererseits am Polsterträger 5 angreifende, vorgespannte Zugfeder 20 schwenkt dann die Seitenwange 3 so weit nach unten, als der Sitzbenutzer dies wünscht. Eine Verriegelung in der neuen Stellung erfolgt durch eine Freigabe der Handhabe 15. Um die Seitenwange 3 nach oben zu schwenken, braucht der Sitzbenutzer nur das vordere Ende der Seitenwange 3 unten zu erfassen oder in die Vertiefung 4' einzugreifen und im gewünschten Masse nach oben zu ziehen. Die Klinke 12 gleitet dann dank der Sägezahnform der Zähne 11 über diese hinweg. Der Betätigungshebel 14 und die Handhabe 15 führen dabei keine Bewegung aus, da, wie Fig. 4 zeigt, die Klinke keine Drehbewegung im Uhrzeigersinn auf den Betätigungshebel übertragen kann.

Das Verstellen der Seitenwange 3 ist also äusserst einfach und bequem. Ausserdem kann es über den gesamten Verstellbereich in relativ kleinen Stufen erfolgen, da es keine Schwierigkeiten bereitet, die Schiene 10 mit einer ausreichend feinen Verzahnung zu versehen. Vorteilhaft ist ferner die spielfreie Führung der Seitenwange. Dank der Zugfeder 20 und der Schenkelfeder 19 kann ferner die Verriegelungseinrichtung auch bei starken Erschütterungen nicht klappern.

Selbstverständlich wäre es auch möglich, das Sägezahnprofil in umgekehrter Richtung vorzusehen, damit ein Druck von oben auf die Seitenwange 3 genügt, um sie, insbesondere um das Aussteigen zu erleichtern, nach unten zu schwenken. Sofern es nicht notwendig ist, die Seitenwange gegen ein Schwenken nach unten formschlüssig zu verriegeln, können auch beide Flanken der Zähne 11 eine so starke Neigung haben, dass für eine Verstellung die Klinke 12 nicht mittels des Betätigungshebels ausgehoben zu werden braucht. Der Betätigungshebel und die Handhabe 15 könnten dann entfallen.

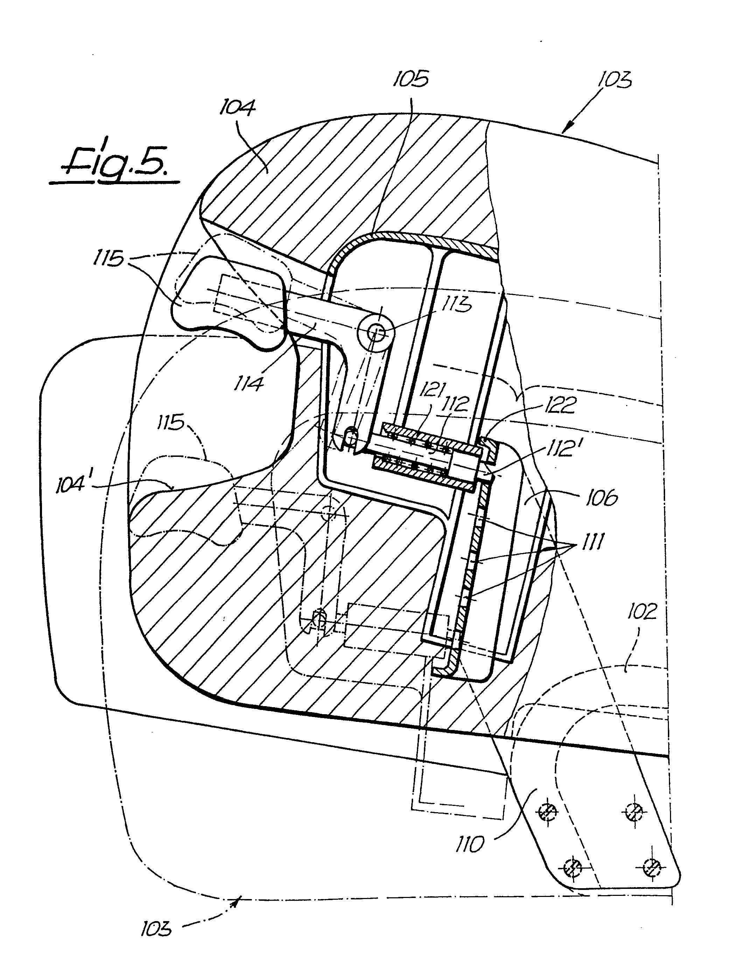

Die in Fig. 5 dargestellte Variante des ersten Ausführungsbeispiels ist nur hinsichtlich der Ausbildung der Verriegelungseinrichtung abgewandelt. Sich entsprechende Teile sind deshalb mit um 100 grösseren Bezugszahlen gekennzeichnet, und die folgende Beschreibung beschränkt sich auf die sich aus der Abwandlung ergebenden Änderungen.

Die am Längsholm 102 befestigte Schiene 110, welche von unten her in den Polsterträger 105 der Seitenwange 103 spielfrei oder zumindest nahezu spielfrei eingreift, ist im Bereich ihres oberen Endes U-förmig abgewinkelt, wobei die beiden Schenkel des U-Profils an den Platten 106 des Polsterträgers 105 anliegen. Der sich in Richtung der Höhe des Polsterträgers erstreckende Stegteil ist mit Bohrungen 111 versehen, welche eine sich in der Schwenkrichtung der Seitenwange erstreckende Reihe bilden und als Rasten dienen. Das mit diesen Rasten zusammenwirkende Rastelement wird durch einen längsverschiebbar, aber undrehbar in einer Hülse 121 geführten, federbelasteten Rastbolzen 112 gebildet. Der Rastbolzen 112 und die Hülse 121 bilden ein handelsübliches Bauteil, das so im Polsterträger festgelegt ist, dass das freie Ende 112' des Rastbolzens 112 in die Bohrungen 111 eindringen kann. Gegen die Hülse 121 hin abgewinkelte Teile 122 des U-förmig geformten oberen Endes der Schiene 110 dienen als Anschlag für die Hülse 121 und begrenzen damit den Schwenkbereich der Seitenwange 103.

Das rückwärtige Ende des Rastbolzens 112 ist, wie Fig. 5 zeigt, mit einem Querstift versehen, der in einen Längsschlitz eines als Winkelhebel ausgebildeten Betätigungshebels 114 eingreift. Dieser ist auf einem Stift 113 schwenkbar gelagert und ragt mit seinem einen Arm und der auf ihm angeordneten Handhabe 115 in die Vertiefung 104', die in der Vorderseite des Polsters 104 vorgesehen ist.

Sofern es erwünscht ist, die Seitenwange 103 in der einen Schwenkrichtung verstellen zu können, ohne die Handhabe 115 betätigen zu müssen, kann man, wie Fig. 5 zeigt, das mit den Bohrungen 111 zusammenwirkende, freie Ende 112' des Rastbolzens 112 abschrägen.

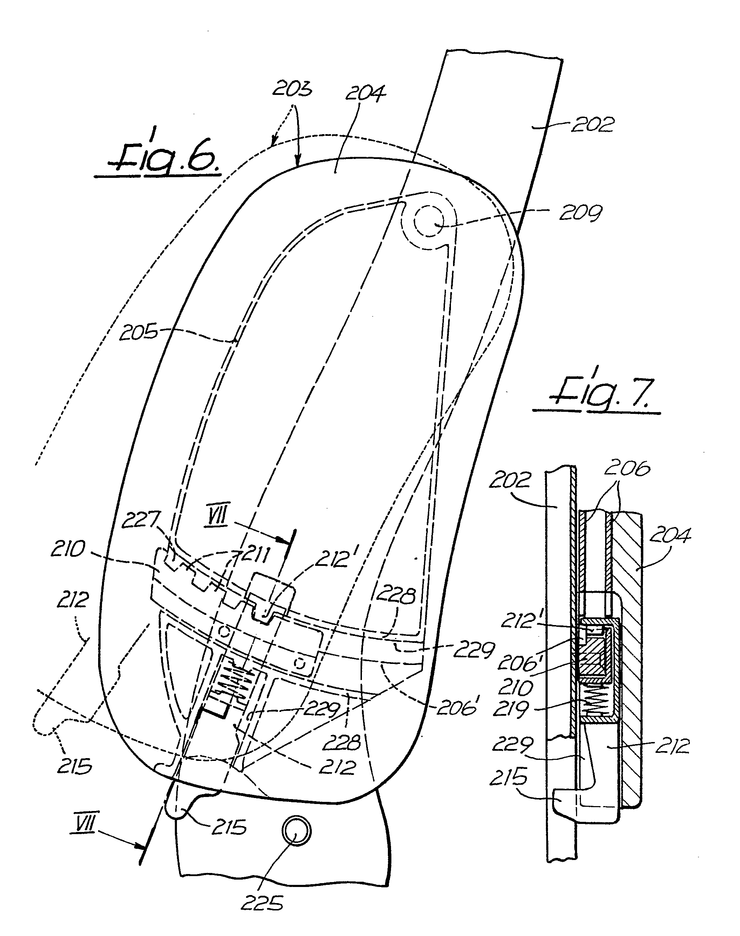

Das Ausführungsbeispiel gemäss den Fig. 6 und 7 ist ein Kraftfahrzeugsitz, dessen um eine Achse 225 schwenkbare Rückenlehne auf der in Fig. 6 sichtbaren Seite eine Seitenwange 203 aufweist. Eine spiegelbildlich gleich ausgebildete und angeordnete, nicht dargestellte Seitenwange ist auf der anderen Seite der Rückenlehne vorgesehen. Dargestellt sind von diesem Sitz jedoch nur ein Teil des Polsterträgers 202 für das Rückenlehnenpolster sowie die Seitenwange 203. Der Sitz kann im Bereich seines Sitzteils ebenfalls Seitenwangen aufweisen, welche im Prinzip wie die Seitenwange 203 ausgebildet sein könnten. Es wäre selbstverständlich aber auch möglich, am Sitzteil Seitenwangen gemäss den Fig. 1 bis 5 vorzusehen, die natürlich auch als Seitenwangen für eine Rückenlehne verwendet werden können, sofern man ihnen eine hierfür geeignete Kontur gibt.

Die Seitenwange 203 dient der seitlichen Abstützung des Sitzbenutzers vom Lendenbereich bis zum unteren Teil des Brustkorbes. Das Polster 204 der Seitenwange 203 erstreckt sich deshalb über diesen Bereich. Es wird von einem Polsterträger 205 getragen, der, wie Fig. 6 zeigt, im Bereich seines oberen Endes um eine zur Schwenkachse der Rückenlehne parallele Achse 209 schwenkbar mit dem Polsterträger 202 der Rükkenlehne verbunden ist. Die Seitenwange 203 kann daher seitlich neben dem Polsterträger 202 in einer im wesentlichen vertikalen Ebene nach vorne und hinten geschwenkt werden, wobei das untere Ende der Seitenwange 203 den maximalen Schwenkweg ausführt. Der Überstand der Seitenwange 203 über das Polster der Rückenlehne hängt natürlich vom Längsprofil der Rückenlehne ab, ist jedoch genügend gross, um dem Sitzbenutzer eine gute seitliche Abstützung zu geben.

Der Polsterträger 205 könnte aus Metall bestehen, ist aber im Ausführungsbeispiel ein Kunststoffkörper mit zwei im Abstand nebeneinander angeordneten Platten 206 (Fig. 7), die im Bereich ihres Randes sowie durch nicht dargestellte Rippen miteinander verbunden sind und daher einen zwar schmalen, aber formstabilen Hohlkörper bilden.

In der unteren Hälfte bildet, wie Fig. 6 zeigt, der Polsterträger 205 eine sich längs einer Kreisbahn um die Achse 209 erstreckende Nut 227, deren die Nutflanken bildenden Wände 228 parallel zueinander verlaufen und ein Rechteckprofil der Nut definieren. Die Nut 227 ist gegen den Polsterträger 202 der Rückenlehne hin nur auf einem Teil ihrer Breite offen, weil sich die dem Polsterträger 202 näherliegende Platte 206 mit einem streifenförmigen Abschnitt 206' über die der Achse 209 näherliegende Wand 228 hinaus erstreckt, wie Fig. 6 zeigt. In der Nut 227 liegt eine im Ausführungsbeispiel aus Metall bestehende Schiene 210, die entsprechend dem Verlauf der Nut 227 gekrümmt und an dem Polsterträger 202, beispielsweise mit Schrauben oder Nieten, befestigt ist. Diese Schiene 210 hat, wie Fig. 7 zeigt, ein L-Profil. Da ihr einer Schenkel den streifenförmigen Abschnitt 206' hintergreift, bildet die Schiene 227 eine Führung für den Polsterträger 205, welche auch in Sitzquerrichtung wirkende Kräfte aufzunehmen und in den Polsterträger der Rückenlehne einzuleiten vermag.

Gleichzeitig bildet die Schiene 210 das eine Glied einer Verriegelungseinrichtung, mittels deren die Seitenwange 203 in wählbaren Schwenkstellungen verriegelt werden kann. Der den streifenförmigen Abschnitt 206' hintergreifende, gegen die Achse 209 weisende Schenkel der Schiene 210 ist deshalb mit gegen die Achse 209 weisenden, trapezförmigen Zähne 211 versehen, die eine in Längsrichtung der Nut 227 verlaufende Zahnstange ergeben und zwischen sich je eine Raste bilden. Das andere Glied der Verriegelungseinrichtung wird durch einen Schieber 212 gebildet, der in einer radial bezüglich der Achse 209 verlaufenden Führung 229 des Polsterträgers 205 translatorisch verschiebbar und gegen eine Querverschiebung formschlüssig gesichert gelagert ist. Wie Fig. 7 zeigt, ist das gegen die Achse 209 weisende Ende des Schiebers 212 hakenförmig ausgebildet. Dieses hakenförmige Ende durchgreift einen Führungsschlitz in der vom Polsterträger 202 weiter ab liegenden Platte 206 und hintergreift den die Zähne 211 tragenden Schenkel der Schiene 210. Hierdurch trägt auch der Schieber 212 dazu bei, in Querrichtung der Rückenlehne wirkende Kräfte, welche auf die Seitenwange einwirken, in die Schiene 210 einzuleiten. Wie Fig. 7 ferner zeigt, ist am Jochteil des hakenförmigen Endabschnitts des Schiebers 212 ein zahnartiger Vorsprung 212' angeformt, dessen Querschnittsprofil an das Profil der zwischen den Zähnen 211 gebildeten Rasten angepasst ist, da dieser Vorsprung in der Verriegelungsstellung in eine dieser Rasten eingreift, wie Fig. 6 zeigt, und damit die Seitenwange formschlüssig gegen eine Schwenkbewegung verriegelt. Eine sich einerseits am Schieber 212 und andererseits an der von der Achse 209 weiter entfernt liegenden Wand 228 abstützende, wie der Schieber in der Führung 229 liegende und vorgespannte Schraubendruckfeder 219 sucht den Vorsprung 212' des Schiebers 212 in Eingriff mit der Schiene 210 zu halten. Um die Seitenwange 203 verschwenken zu können, muss der Sitzbenutzer mittels einer Handhabe 215, die an das nach unten weisende Ende des Schiebers 212 angeformt ist und nach unten etwas über die Seitenwange übersteht, den Schieber 212 so weit nach oben verschieben, dass der Vorsprung 212' aus der Raste ausrastet. Nachdem anschliessend die Seitenwange verschwenkt worden ist, beispielsweise von der in Fig. 6 mit ausgezogenen Linien dargestellte Lage in die mit gestrichelten Linien dargestellte Lage, braucht nur die Handhabe 215 wieder freigegeben zu werden. Dank der Schraubendruckfeder 219 bewegt sich dann der Schieber 212 wieder in die Verriegelungsstellung. Gegebenenfalls muss noch, damit der Vorsprung 212' auf eine Raste ausgerichtet wird, die Schwenklage der Seitenwange geringfügig korrigiert werden.

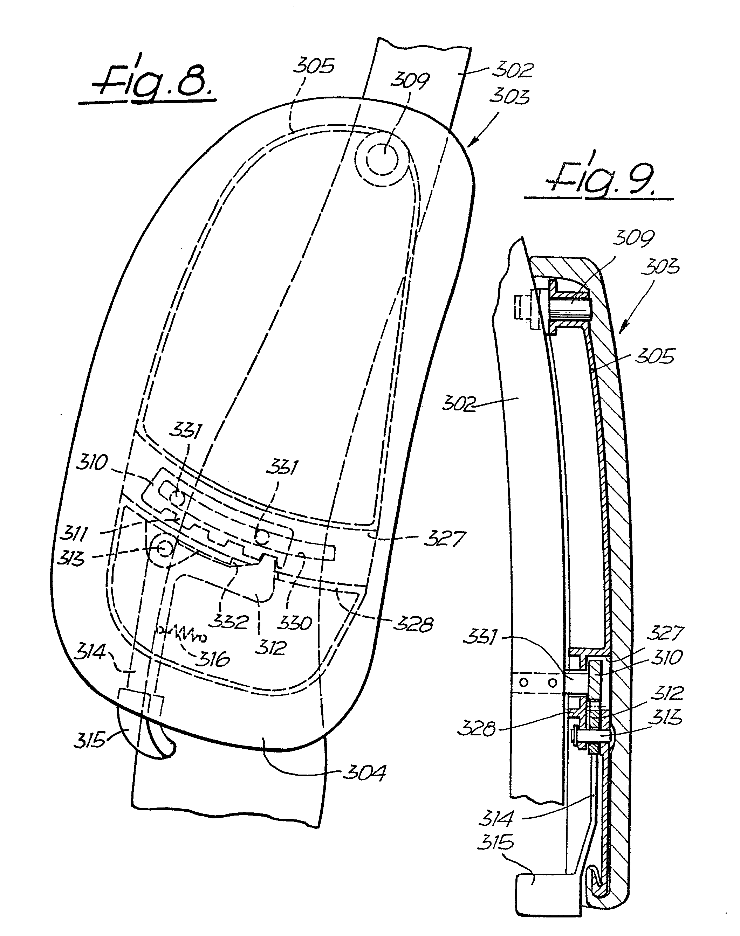

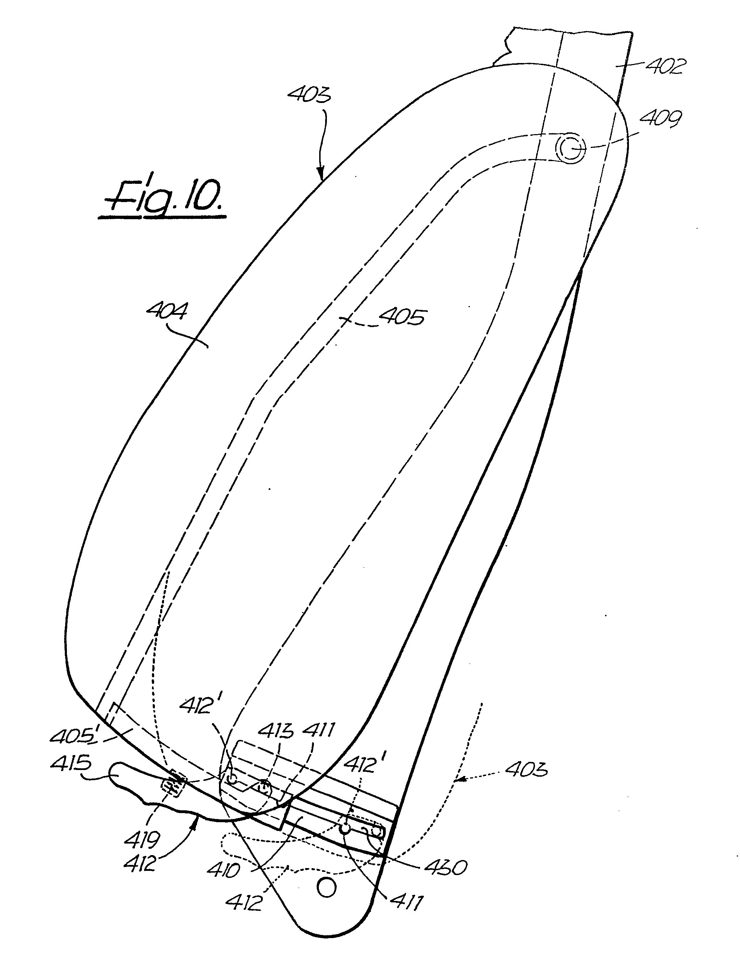

Bei der in den Fig. 8 und 9 dargestellten Variante des zweiten Ausführungsbeispiels handelt es sich wie bei der Variante gemäss den Fig. 6 und 7 um einen Fahrzeugsitz, dessen Rückenlehne mit hängend und um eine zur Schwenkachse der Rückenlehne parallele Achse schwenkbar angeordneten Seitenwangen 303 versehen ist. Da sich diese Variante im wesentlichen von derjenigen gemäss den Fig. 6 und 7 nur durch eine andere Ausbildung der Verriegelungseinrichtung unterscheidet, wird nachfolgend nur diese Abwandlung beschrieben. Ausserdem sind, wie bei den übrigen Ausführungsbeispielen, sich entsprechende Teile mit in der Einerstelle und Zehnerstelle gleichen Bezugszahlen versehen.

Die längs eines zur Schwenkachse 309 konzentrischen Kreisbogens verlaufende Nut 327 des Polsterträgers 305 der Seitenwange ist nach aussen hin offen und weist in dem den Nutgrund bildenden Stegteil einen in Nutlängsrichtung verlaufenden Schlitz 330 auf, den zwei Distanzbolzen 331 durchgreifen, die fest mit dem Polsterträger 302 der Rückenlehne verbunden sind und die in der Nut 327 liegende Schiene 310 fest mit dem Polsterträger 302 verbinden. Die Schiene leitet also auch bei dieser Ausführungsform Kräfte, die in Querrichtung der Rückenlehne auf die Seitenwange 303 einwirken, formschlüssig in den Polsterträger der Rückenlehne ein.

In der von der Schwenkachse 309 weiter entfernten Wand 328, welche die Nut 327 seitlich begrenzt, ist ein Durchbruch 332 vorgesehen, den eine Klinke 312 durchgreift, die auf einem zur Schwenkachse 309 parallel liegenden Stift 313, der im Polsterträger 305 festgelegt ist, schwenkbar gelagert ist. Diese Klinke 312 bildet zusammen mit der Schiene 310, deren gegen die Klinke weisender Randstreifen mit Zähnen 311 versehen ist, die zwischen sich je eine Raste bilden, die Verriegelungseinrichtung. Das Profil der Rasten und das an sie angepasste Profil des freien Klinkenendes sind so gewählt, dass im verriegelten Zustand die Seitenwange formschlüssig gegen ein Verschwenken gesichert ist. Für eine Betätigung der Klinke 312 ist an diese ein sich vom Stift 313 nach unten erstreckender, also etwa im rechten Winkel zur Klinke verlaufender Betätigungshebel 314 angeformt, dessen nach unten über das Polster 304 der Seitenwange überstehende Handhabe 315 entgegen der Kraft einer am Betätigungshebel 314 angreifenden Rückstellfeder 316 vom Sitzbenutzer entgegen deren Kraft nach vorne gezogen werden muss, um die Klinke 312 ausser Eingriff zu bringen. Nachdem die gewünschte neue Schwenkstellung der Seitenwange erreicht ist, wird die Handhabe 315 wieder freigegeben. Die Rückstellfeder 316 sorgt dann für eine selbsttätige Verriegelung. Allenfalls muss, um den Eingriff der Klinken in die Raste zu ermöglichen, die Schwenkstellung geringfügig korrigiert werden.

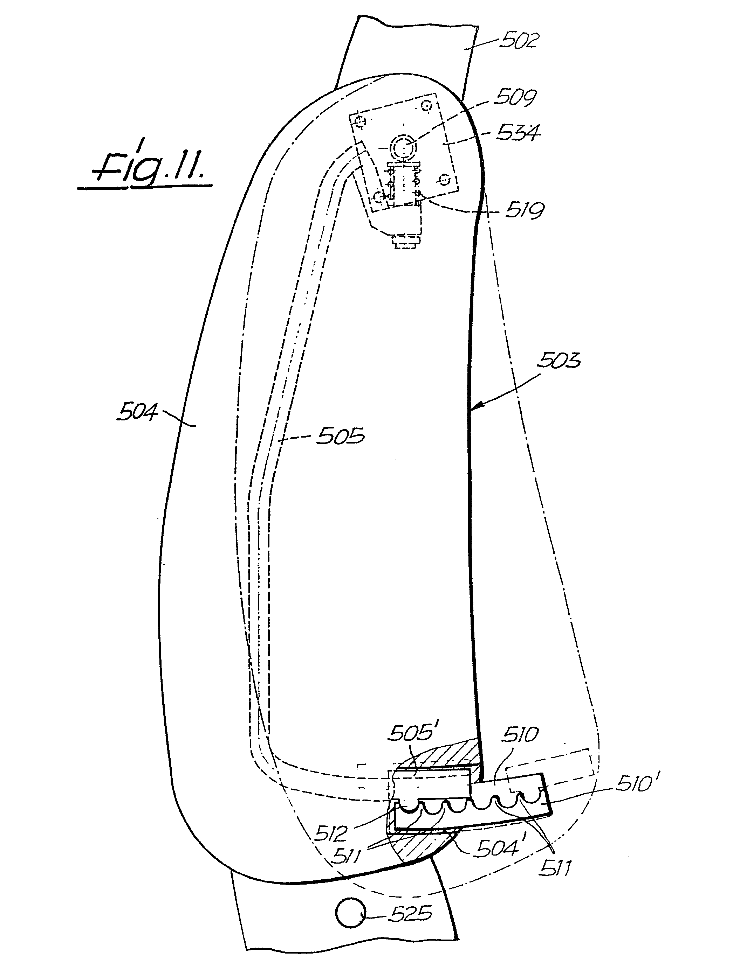

Das in Fig. 10 dargestellte dritte Ausführungsbeispiel stimmt mit dem Ausführungsbeispiel gemäss den Fig. 6 bis 9 hinsichtlich der Form und Anlenkung seiner Seitenwange 403 am Polsterträger 402 der Rückenlehne überein. Es unterscheidet sich von letzterem nur durch eine andere Ausbildung der Verriegelungseinrichtung und dadurch, dass der Polsterträger 405 der Seitenwange 403 ein Rohrrahmen ist. Die Verriegelung dieses Ausführungsbeispiels könnte aber auch bei einer Seitenwange mit einem Kunststoffkörper als Polsterträger vorgesehen sein. Ferner ist noch darauf hinzuweisen, dass wie bei den übrigen Ausführungsbeispielen die auf der anderen Seite der Rückenlehne vorgesehene Seitenwange spiegelbildlich gleich ausgebildet und angeordnet ist und dass diese Seitenwangenkonstruktion grundsätzlich auch für den Sitzteil in Frage kommen könnte.

An der der Seitenwange 403 zugewandten Seite des Polsterträgers 402 der Rückenlehne ist eine Schiene 410 befestigt, beispielsweise angeschweisst oder angenietet. Diese aus Metall bestehende Schiene 410 hat ein Z-Profil. Der im Abstand vom Polsterträger 402 liegende und nach unten, also von der Schwenkachse 409 wegweisende Schenkel ist mit einem Längsschlitz 430 versehen, welcher längs eines konzentrisch zur Schwenkachse 409 liegenden Kreisbogenabschnitts verläuft. In dem den Längsschlitz 430 nach unten begrenzenden Randstreifen der Schiene 410 sind im Abstand voneinander angeordnete, zum Längsschlitz hin offene Rasten 411 vorgesehen, die im Ausführungsbeispiel ein halbkreisförmiges Profil haben.

Den mit dem Längsschlitz 430 versehenen Schenkel der Schiene 410 übergreift von unten her eine U-Profilschiene 405', welche den sich längs des unteren Endes der Seitenwange 403 erstreckenden Teils von deren Polsterträger 405 bildet. Die Schiene 410 bildet daher auch bei diesem Ausführungsbeispiel eine Führung für das von der Gelenkachse 409 entfernte Ende der Seitenwange 403 und nimmt formschlüssig Kräfte auf, welche in Querrichtung der Rückenlehne auf die Seitenwange 403 einwirken.

Die U-Profilschiene 405' wird von unten her von dem ebenfalls ein U-Profil bildenden einen Endabschnitt einer Klinke 412 übergriffen, die auf einem parallel zur Schwenkachse 409 liegenden, den Längsschlitz 430 durchdringenden Stift 413 schwenkbar gelagert ist, der in der Profilschiene 405' festgelegt ist. Parallel zum Stift 413 und im Abstand von diesem ist in der Klinke 412 ein Klinkenstift 412' angeordnet, welcher zur Verriegelung der Seitenwange 403 in der gewählten Schwenkstellung in eine der Rasten 411 eingreift. Eine sich einerseits an der Profilschiene 405' und andererseits an der Klinke 412 abstützende, vorgespannte Schraubendruckfeder 419 sucht den Klinkenstift 412' in Eingriff mit der gewählten Raste zu halten. Um die Schwenklage der Seitenwange 403 zu verändern, muss der Sitzbenutzer das als Handhabe 415 ausgebildete freie Ende der Klinke 412, das unten aus dem Polster 404 der Seitenwange herausragt, entgegen der Kraft der Feder 419 nach oben drücken. Bei der hierdurch bewirkten Schwenkbewegung der Klinke 412 tritt der Klinkenstift 412' aus der Raste aus und in den Längsschlitz 430 ein. Nun kann die Seitenwange geschwenkt werden, wobei nicht nur der die Schwenkachse der Klinke bildende Stift 413, sondern auch der Klinkenstift 412' im Längsschlitz 430 bewegt werden. In der gewünschten neuen Schwenkstellung wird dann die Handhabe wieder freigegeben. Nach einer gegebenenfalls erforderlichen Ausrichtung des Klinkenstiftes 412' auf eine der Rasten wird die Seitenwange wieder selbsttätig verriegelt.

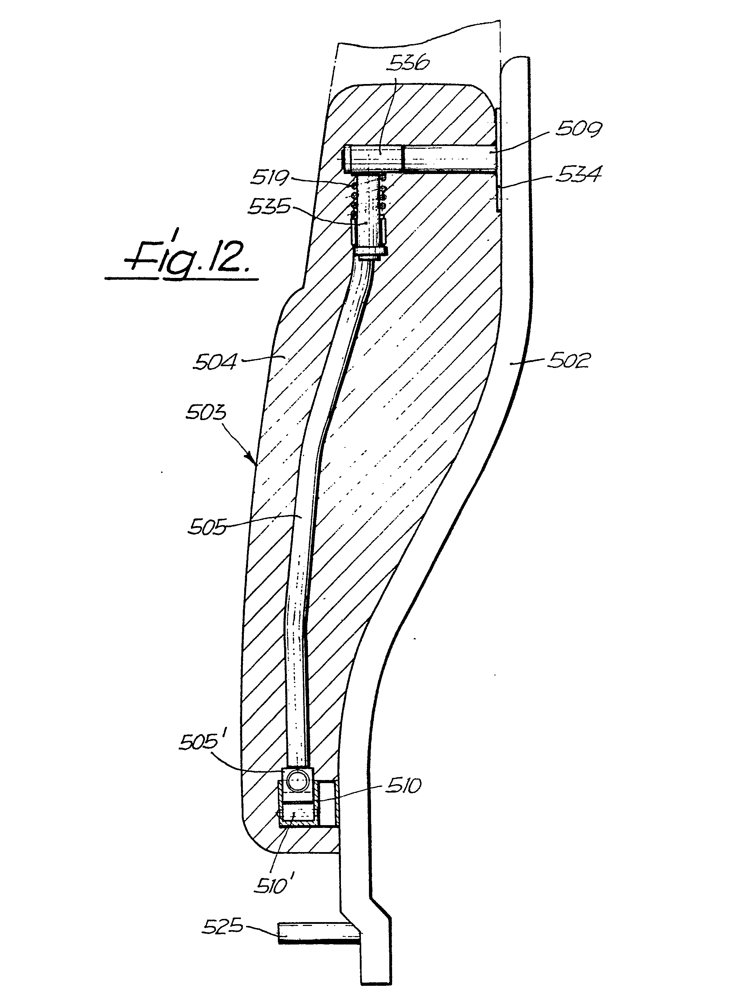

Im Gegensatz zu den vorstehend beschriebenen Ausführungsbeispielen ist bei dem Ausführungsbeispiel gemäss den Fig. 11 und 12 die Seitenwange 504, die bei den Ausführungsbeispielen gemäss den Fig. 6 bis 10 an der Rückenlehne eines Kraftfahrzeugsitzes vorgesehen ist, jedoch auch am Sitzteil eines solchen Sitzes vorgesehen sein könnte, bezüglich des sie tragenden Polsterträgers 502 nicht nur um eine in Sitzquerrichtung verlaufende Achse 509 schwenkbar. Sie ist zusätzlich auch in radialer Richtung bezüglich dieser Schwenkachse 509 verschiebbar mit letzterer verbunden. Von der Schwenkachse 509, die parallel zu der Achse 525 angeordnet ist, um welche die Rückenlehne relativ zum Sitzteil verschwenkbar ist, und die mittels einer Platte 534 mit dem Polsterträger 502 der Rückenlehne fest verbunden ist, steht deshalb in radialer Richtung ein Stab 535 ab, der ein Mehrkantprofil oder Abflachungen hat und von einer drehbar, aber axial unverschiebbar auf der Achse 509 gelagerten Buchse 536 getragen wird. Das obere Ende des als Rohrrahmen ausgebildeten Polsterträgers 505 der Seitenwange 503 ist auf dem Stab 535 in dessen Längsrichtung verschiebbar, aber undrehbar, geführt. Eine vorgespannte Schraubendruckfeder 519, welche um den Stab 535 gelegt ist, drückt das auf dem Stab 535 verschiebbar gelagerte Ende des Polsterträgers 504 gegen das freie Stabende, was eine Belastung der Seitenwange 503 im Sinne einer Verschiebung nach unten bedeutet.

An der der Seitenwange 503 zugekehrten Seite des Polsterträgers 502 der Rückenlehne ist in Höhe des unteren Endes der Seitenwange eine im Ausführungsbeispiel aus Metall bestehende Schiene 510 befestigt, die ein zur Achse 509 hin offenes U-Profil bildet und sich in Richtung eines zur Achse 509 konzentrischen Kreisbogens erstreckt oder, wegen der geringen Krümmung dieses Kreisbogens, auch geradlinig ausgebildet sein, was auch für die zuvor beschriebenen Ausführungsbeispiele gilt. Das Polster 504 der Seitenwange 503 weist eine auf die Schiene 510 ausgerichtete Vertiefung 504' auf, in welche die Schiene 510 eingreift. In der Vertiefung 504' ragt auch das untere Ende des Polsterträgers 505 der Seitenwange. Dieses Ende ist im Ausführungsbeispiel so ausgebildet, dass es in das U-Profil der Schiene 510 eingreift. Es könnte aber auch den einen Schenkel der Schiene von oben her übergreifen. In beiden Fällen bildet die Schiene 510 eine zusätzliche Führung für die Seitenwange, welche in Sitzquerrichtung auf die Seitenwange einwirkende Kräfte formschlüssig aufnimmt.

In der Schiene 510 liegt eine Zahnstange 510' mit nach oben weisenden Zähnen 511. Diese Zahnstange 510' ist beispielsweise mittels Querstiften fest mit der Schiene 510 verbunden. Ein das untere Ende des Polsterträgers 505 der Seitenwange bildender Führungskörper 505', der ein an das U-Profil der Schiene 510 angepasstes Vierkantprofil hat, weist einen nach unten überstehenden Rastzahn 512 auf, der wie das freie Ende der Klinken der zuvor beschriebenen Ausführungsbeispiele in eine der Rasten eingreift und dadurch die Seitenwange in der gewählten Schwenklage sichert.

Um die Seitenwange 503 in eine andere Schwenklage zu bringen, muss der Sitzbenutzer sie entgegen der Kraft der Feder 519 nach oben, also gegen die Achse 509 hin, ziehen oder drücken. Dabei kommt der Rastzahn 512 ausser Eingriff. Nachdem die Seitenwange 503 in ihre neue Schwenkstellung gebracht worden ist, wird die Seitenwange wieder freigegeben. Sie bewegt sich dann durch die Kraft der Feder 519 nach unten, wobei der Rastzahn 512 wieder in eine der Rasten eingreift.

Sofern das untere Ende des Polsterträgers 505 der Seitenwange den einen Schenkel der Schiene 510 übergreift, kann dieser Schenkel als Zahnstange ausgebildet sein. Der Rastzahn kann dann beispielsweise durch einen Querstift gebildet sein, der in den beiden die Schiene übergreifenden Schenkeln des Polsterträgers festgelegt ist.

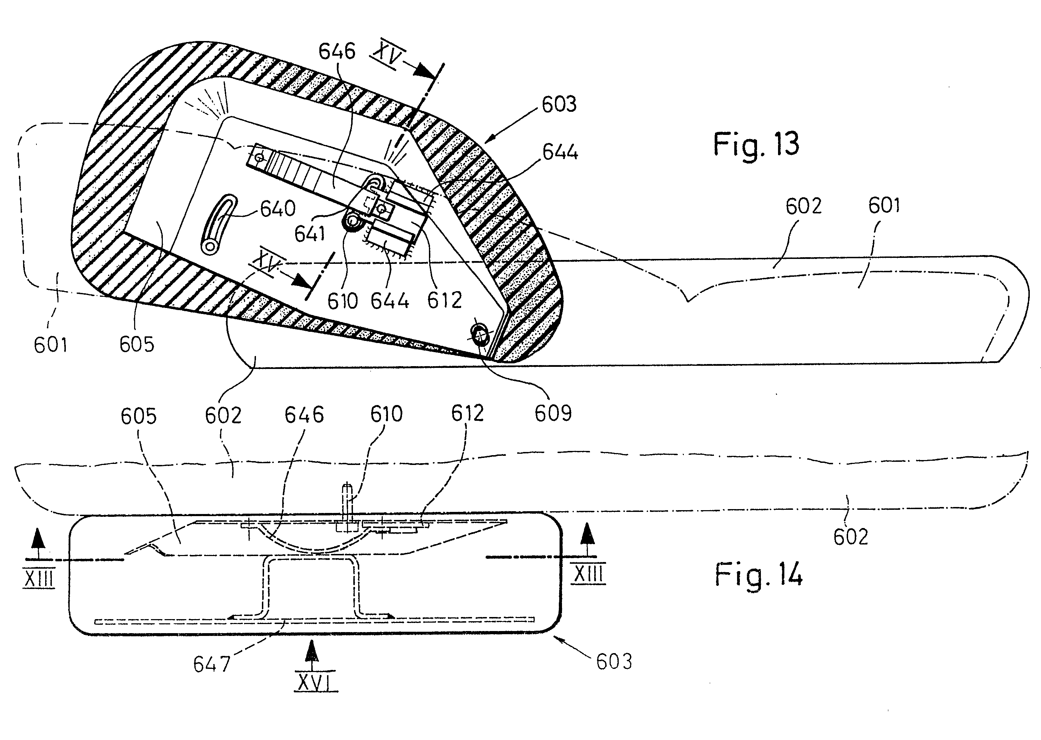

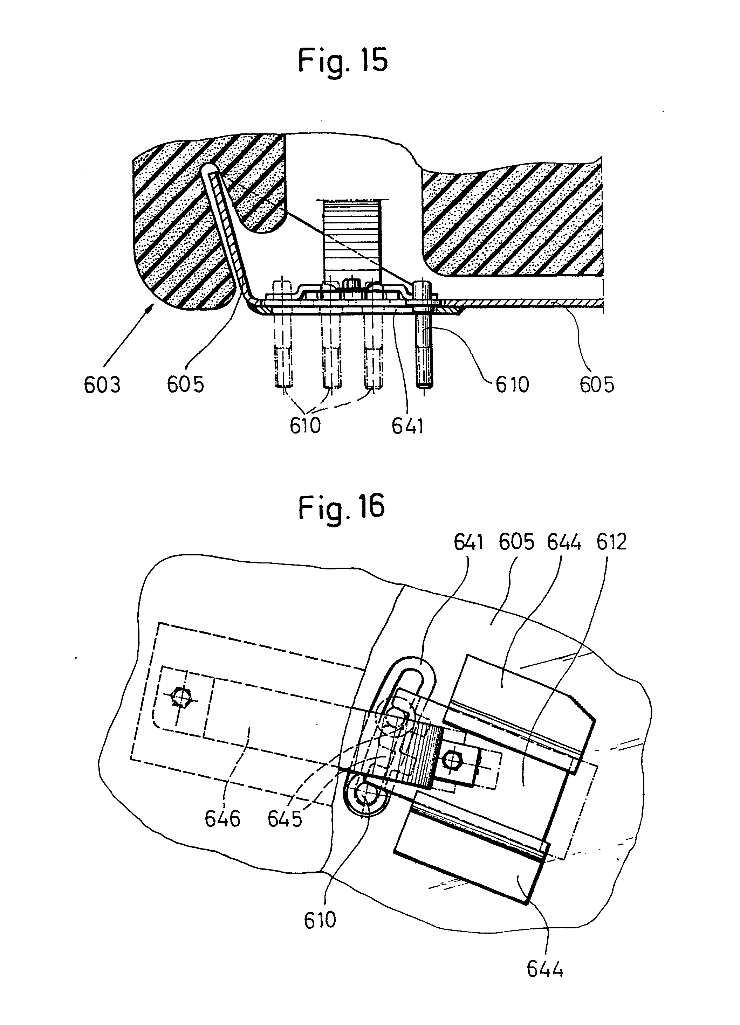

Das in den Fig. 13 bis 16 dargestellte, fünfte Ausführungsbeispiel des erfindungsgemässen Kraftfahrzeugsitzes weist wenigstens auf der einen Seite des Sitzteils eine Seitenwange 603 auf, die um eine in Sitzquerrichtung verlaufende Achse 609 schwenkbar am Träger 602 des Sitzteilpolsters 601 angelenkt ist. Bei einer passenden Gestaltung der Form der Seitenwange könnte diese aber auch am Polsterträger der nicht dargestellten Rückenlehne des Sitzes angelenkt sein.

Der Polsterträger 605 der Seitenwange 603 besteht aus einer Platte, deren nach oben und nach vorne weisende Randzone hochgestellt ist, und zwar derart, dass sie vom Sitzteil wegweist.

Zu der am hinteren Ende des Polsterträgers 605 vorgesehenen Öffnung für den Durchtritt der Achse 609, welche den Polsterträger auch gegen eine axiale Verschiebung sichert, ist nahe der vorderen Randzone konzentrisch ein Schlitz 640 im Polsterträger vorgesehen, den ein am Träger 602 befestigter Bolzen durchgreift, der mit einem den Schlitz übergreifenden Kopf auf die Seitenwange in Sitzquerrichtung ausgeübte Kräfte in den Träger einleitet. Ein zweiter, ebenfalls zur Schwenkachse 609 konzentrisch verlaufender Schlitz 641 ist nahe der oberen Randzone in etwas geringerem Abstand von der Schwenkachse 609 als der erste Schlitz 640 im Polsterträger 605 vorgesehen. Diesen zweiten Schlitz durchgreift ein am Träger 602 befestigter, parallel zur Achse 609 liegender Bolzen 610, welcher das eine Verriegelungsglied der Verriegelungseinrichtung bildet, mittels deren die Seitenwange in wählbaren Schwenkstellungen feststellbar ist. Der Bolzen 610 hat einen ringscheibenförmigen Kragen, welcher auf der dem Sitzteil abgekehrten Seite den vertieft liegenden Rand des Schlitzes 641 übergreift. Über die vom Sitzteil wegweisende Seite des Polsterträgers 605 steht deshalb nur ein sich an den Kragen anschliessender Endabschnitt des Bolzens 610 über.

Das dem Bolzen 610 zugeordnete zweite Verriegelungsglied ist als ein Schieber 612 ausgebildet, der in einer Führungsschiene 644 längsverschiebbar geführt ist, die am Polsterträger 605 auf der dem Sitzteil abgekehrten Seite vorgesehen ist. Die Verschieberichtung des Schiebers 612 verläuft zumindest annähernd im rechten Winkel zu der Längserstreckung des zweiten Schlitzes 641. Der aus Metall bestehende, als Stanzteil ausgebildete Schieber 612 ist in dem dem Bolzen 610 zugekehrten Endabschnitt mit zwei in der Erstreckungsrichtung des zweiten Schlitzes 641 im Abstand nebeneinander angeordneten Rasten 645 versehen. Es könnte aber auch nur eine einzige Raste oder eine grössere Anzahl von Rasten vorgesehen sein. Je nach der Schwenkstellung der Seitenwange 603 greift der Endabschnitt des Bolzens 610 in eine der Rasten 645 ein. In dieser Verriegelungsstellung übergreift der Schieber 612 den Kragen des Bolzens 610. Daher können in Sitzquerrichtung am Polsterträger 605 angreifende Kräfte auch über den Bolzen 610 in den Träger 602 eingeleitet werden.

Im Ausführungsbeispiel ist die Länge des zweiten Schlitzes 641 so gewählt, dass der Endabschnitt des Bolzens 610 an der einen bzw. anderen Längsseite des Schiebers 612 anliegt, wenn sich der Bolzen 610 am einen bzw. anderen Ende des zweiten Schlitzes 641 befindet. Daher wird die Seitenwange 603 auch in diesen beiden Endstellungen ihres Schwenkbereichs von der aus dem Bolzen 610 und dem Schieber 612 gebildeten Verriegelungseinrichtung verriegelt.

Zur Betätigung des Schiebers 612 ist an ihm das eine Ende einer bogenförmig gekrümmten Blattfeder 646 befestigt, deren anderes Ende am Polsterträger 605 festgelegt ist. Die Blattfeder 646 erstreckt sich annähernd in der Bewegungsrichtung des Schiebers 612 über dessen mit den Rasten 645 versehenes Ende hinaus, und ihre Wölbung weist zur Aussenseite der Seitenwange 603 hin. Dort ist eine Druckplatte 647 in die Polsterung eingebettet, welche der Sitzbenutzer nach innen, also gegen den Polsterträger 605 drücken kann, indem er beispielsweise die Seitenwange von oben her übergreift. Durch den auf die Druckplatte 647 ausgeübten Druck wird die Wölbung der Blattfeder 646 verringert. Dabei wird der Schieber 612 zurück, also in seine Freigabestellung geschoben, in welcher er den Bolzen 610 freigibt. Bei Freigabe der Druckplatte 647 nimmt die Blattfeder 646 wieder ihre ursprüngliche Krümmung an. Daher wird die Seitenwange wieder selbsttätig verriegelt. Allenfalls ist noch eine geringe Schwenkbewegung erforderlich, bis eine Einrastung unter der Belastung durch die Blattfeder 646 erfolgt.

## Patentansprüche

1. Fahrzeugsitz, insbesondere Kraftfahrzeugsitz, mit wenigstens einer gepolsterten Seitenwange (3; 103), die seitlich neben der Polsterung (1) angeordnet, um eine in Sitzquerrichtung verlaufenden Achse (9) schwenkbar mit dem Polsterträger (2; 102) des Sitzes verbunden und zumindest in zwei unterschiedlichen Schwenkstellungen mittels einer Verriegelungseinrichtung (10, 12; 110, 112, 112') feststellbar ist, die zwei im Abstand von der Schwenkachse (9) angeordnete, einander zugeordnete Verriegelungsglieder (10, 12; 110, 112, 112') aufweist, welche mit dem Polsterträger (2; 102) des Sitzes bzw. dem Polsterträger (5; 105) der Seitenwange (3; 103) verbunden sind und von denen das eine (12; 112, 112') bei einer Schwenkbewegung der Seitenwange (3; 103) sich am anderen Glied (10; 110) vorbei bewegt, bei wirksamer Verriegelungsrichtung (10, 12; 110, 112, 112') in wählbaren Positionen mit ihm zusammenwirkt und mittels eines Betätigungsgliedes (14, 15; 114, 115) in eine unwirksame Stellung bewegbar ist, dadurch gekennzeichnet, dass bei einer Schwenkverbindung der Seitenwange (3; 103) mit dem Polsterträger (2; 102) des Sitzteils die Schwenkachse (9) im Bereich des hinteren Endes des Polsterträgers (5; 105) der Seitenwange (3; 103) angeordnet ist und das Betätigungsglied (14, 15; 114, 115) im Bereich des vorderen Endes des Polsterträgers (5; 105) der Seitenwange (3; 103) am Polsterträger (5; 105) gelagert ist.

2. Fahrzeugsitz, insbesondere Kraftfahrzeugsitz, mit wenigstens einer gepolsterten Seitenwange (203; 303; 403), die seitlich neben der Rückenlehne angeordnet, um eine in Sitzquerrichtung verlaufende Achse (209; 309; 409) schwenkbar mit dem Polsterträger (202; 302; 402) der Rückenlehne verbunden und zumindest in zwei unterschiedlichen Schwenkstellungen mittels einer Verriegelungseinrichtung (210, 212, 212'; 310, 312; 410, 412, 412') feststellbar ist, die zwei im Abstand von der Schwenkachse (209; 309; 409) angeordnete, einander zugeordnete Verriegelungsglieder (210, 212, 212'; 310, 312; 410, 412, 412') aufweist, von denen das eine (210; 310; 410) bei einer Schwenkbewegung der Seitenwange (203; 303; 403) sich am anderen Glied (212, 212'; 312; 412, 412') vorbei bewegt, bei wirksamer Verriegelungseinrichtung (210, 212, 212'; 310, 312; 410, 412, 412') in wählbaren Positionen mit ihm zusammenwirkt und mittels eines Betätigungsgliedes (215; 315; 415) in eine unwirksame Stellung bewegbar ist, dadurch gekennzeichnet, dass das eine Verriegelungsglied (210; 310; 410) mit dem Polsterträger (202; 302; 402) der Rückenlehne, das andere (212, 212'; 312; 412, 412') mit dem Polsterträger (205; 305; 405) der Seitenwange (203; 303; 403) verbunden ist und dass das Betätigungsglied (215; 315; 415) im Bereich des unteren Endes des Polsterträgers (205; 305; 405) der Seitenwange (203; 303; 403) am Polsterträger (205; 305; 305) gelagert ist.

3. Fahrzeugsitz, insbesondere Kraftfahrzeugsitz, mit wenigstens einer gepolsterten Seitenwange (503), die seitlich neben der Sitzpolsterung angeordnet, um eine in Sitzquerrichtung verlaufende Achse (509) schwenkbar mit dem Polsterträger (502) des Sitzes verbunden und zumindest in zwei unterschiedlichen Schwenkstellungen mittels einer Verriegelungseinrichtung (510, 510', 512) feststellbar ist, die zwei im Abstand von der Schwenkachse (509) angeordnete, einander zugeordnete Verriegelungsglieder (510, 510', 512) aufweist, welche mit dem Polsterträger (502) des Sitzes bzw. dem Polsterträger (505) der Seitenwange (503) verbunden sind und von denen das eine als Rastschiene (510, 510') ausgebildet ist, mit der bei wirksamer Verriegelungseinrichtung (510, 510', 512) das andere, ein Rastglied (512) bildende Verriegelungsglied in Eingriff steht, dadurch gekennzeichnet, dass die Seitenwange (503) in Richtung ihrer Längserstreckung verschiebbar und gegen eine Drehung um ihre Längsachse gesichert mit der Schwenkachse (509) verbunden ist und dass nicht nur das als Rastschiene (510, 510') ausgebildete eine Verriegelungsglied, sondern auch das ein Rastelement (512) bildende andere Verriegelungsglied, das durch eine Längsverschiebung der Seitenwange (503) aus- und einrastbar ist, mit dem sie tragenden Polsterträger (502 bzw. 505) fest verbunden ist.

4. Fahrzeugsitz, insbesondere Kraftfahrzeugsitz, mit wenigstens einer gepolsterten Seitenwange (603), die seitlich neben der Sitzpolsterung (610) angeordnet, um eine in Sitzquerrichtung verlaufende Achse (609) schwenkbar mit dem Polsterträger (602) des Sitzes verbunden und zumindest in zwei unterschiedlichen Schwenkstellungen mittels einer Verriegelungseinrichtung (610, 612) feststellbar ist, die zwei im Abstand von der Schwenkachse (609) angeordnete, einander zugeordnete Verriegelungsglieder (610, 612) aufweist, welche mit dem Polsterträger (602) des Sitzes bzw. dem Polsterträger (605) der Seitenwange (603) verbunden sind und von denen das eine (612) bei einer Schwenkbewegung der Seitenwange (603) sich am anderen Glied (610) vorbei bewegt, bei wirksamer Verriegelungseinrichtung in wählbaren Positionen mit ihm zusammenwirkt und mittels eines Betätigungsgliedes (646) in eine unwirksame Stellung bewegbar ist, dadurch gekennzeichnet, dass das eine Verriegelungsglied als ein translatorisch bewegbarer Schieber (612) ausgebildet ist, der an dem gegen das andere Verriegelungsglied (610) weisenden Ende mit wenigstens einer Raste (645) für den Eingriff des als Rastelement ausgebildeten anderen Verriegelungsgliedes (610) versehen ist und an dem das als Blattfeder (646) ausgebildete Betätigungsglied angreift, die gegen die Aussenseite der Seitenwange (603) hin gewölbt ist, mit ihrem anderen Ende am Polsterträger (605) der Seitenwange (603) festgelegt ist und bei einer Verkleinerung der Wölbung den Schieber (612) in seine Freigabestellung bewegt.

5. Fahrzeugsitz nach Anspruch 1 oder 2, dadurch gekennzeichnet, dass ein als Handhabe (15, 115) ausgebildeter Teil des Betätigungsgliedes (14, 15; 114, 115) in einer nur zum freien Ende hin offenen Vertiefung (4'; 104') des Polsters (4; 104) der Seitenwange (3; 103) liegt.

6. Fahrzeugsitz nach einem der Ansprüche 1 bis 5, dadurch gekennzeichnet, dass bei einer Ausbildung des einen Verriegelungsgliedes als eine Rastschiene (10; 110) die eine Flanke der in der Rastschiene (10) vorgesehenen Rasten und/oder die eine Flanke des in diese Rasten eingreifenden Teils (112') des anderen, ein Rastelemente bildenden Verriegelungsgliedes (112) eine ausserhalb des Selbsthemmungsbereiches liegende Neigung haben.

7. Fahrzeugsitz nach Anspruch 6, dadurch gekennzeichnet, dass die Rasten durch je eine Lücke zwischen zwei aufeinanderfolgenden, sägezahnförmigen Zähnen (11) gebildet sind.

8. Fahrzeugsitz nach Anspruch 6 oder 7, dadurch gekennzeichnet, dass ein vom Betätigungsglied (14, 15) gebildeter erster Arm (14) mit einem vom Rastelement gebildeten zweiten Arm (12) schwenkbar verbunden ist, wobei die Schwenkbarkeit relativ zueinander in der einen Richtung durch einen Anschlag (18) begrenzt ist, und dass eine vorgespannte Feder (19) vorgesehen ist, welche die beiden Arme (12, 14) in der durch den Anschlag definierten Stellung zu halten sucht.

9. Fahrzeugsitz nach einem der Ansprüche 6 bis 8, dadurch gekennzeichnet, dass das eine Rastelement (112) einen längsverschiebbar geführten und mittels des Betätigungsgliedes (114, 115) bewegbaren Rastbolzen (112, 112') aufweist.

10. Fahrzeugsitz nach einem der Ansprüche 1, 2, 5, 6 oder 7, dadurch gekennzeichnet, dass das Rastelement als ein translatorisch bewegbarer, vorzugsweise federbelasteter Schieber (212) ausgebildet ist.

11. Fahrzeugsitz nach Anspruch 10, dadurch gekennzeichnet, dass die Bewegungsrichtung des Schiebers (212) zumindest annähernd radial bezüglich der Schwenkachse (209) der Seitenwange (203) gewählt ist.

12. Fahrzeugsitz nach Anspruch 3, dadurch gekennzeichnet, dass die Seitenwange (503) im Bereich ihres oberen Endes durch die Schwenkachse (509) mit dem Polsterträger (502) der Rückenlehne verbunden ist und die Bewegung bei der Längsverschiebung zum Zwecke des Ausrastens nach oben gerichtet ist.

13. Fahrzeugsitz nach Anspruch 4, dadurch gekennzeichnet, dass das Rastelement fest mit dem Polsterträger (602) des Sitzes verbunden ist und der mit dem Rastelement zusammenwirkende Schieber (612) quer zu der Bewegungsbahn des Rastelementes relativ zum Schieber (612) bewegbar am Polsterträger (605) der Seitenwange (603) geführt ist.

14. Fahrzeugsitz nach Anspruch 13, dadurch gekennzeichnet, dass der Polsterträger (605) der Seitenwange (603) mit einem Schlitz (641) für den Durchtritt des als Bolzen (610) ausgebildeten Rastelementes versehen ist, das einen Kragen aufweist, der zwischen die Berandung des Schlitzes (641) und den Schieber (612) eingreift.

15. Fahrzeugsitz nach einem der Ansprüche 4, 13 oder 14, gekennzeichnet durch eine im Polster der Seitenwange (603) angeordneten und unter Anlage an der konvexen Seite der Blattfeder (646) im Sinne einer Verkleinerung von deren Wölbung bewegbare Druckplatte (647).

## Claims

1. Vehicle seat, particularly a motor vehicle seat, with at least one padded side member (3; 103), which, disposed laterally alongside the padded portion (1), is pivotable about an axis (9) extending in the transverse direction of the seat, is connected to the padding carrier (2; 102) of the seat and can be locked in at least two different pivoted positions by means of a locking device (10, 12; 110, 112, 112′) which has, located at a distance from the pivoting axis (9), two associated locking members (10, 12; 110, 112, 112′) which are connected to the padding carrier (2; 102) of the seat and the padding carrier (5; 105) of the side member (3; 103) respectively and of which one (12; 112, 112′) upon a pivoting movement of the side member (3; 103) passes by the other member (10; 110) and if the locking device (10, 12; 110, 112, 112′) is in operation, co-operates therewith in selectable positions, being capable of movement into an inoperative position by means of an actuating member (14, 15; 114, 115), characterised in that upon a pivoting connection of the side member (3; 103) to the padding carrier (2; 102) of the seat part, the pivoting axis (9) is located in the region of the rear end of the padding carrier (5; 105) of the side member (3; 103) and in that the actuating member (14, 15; 114, 115) is, in the region of the front end of the padding carrier (5; 105) of the side member (3; 103), mounted on the padding carrier (5; 105).

2. Vehicle seat, in particular a motor vehicle seat, having at least one padded side member (203; 303; 403) which is disposed laterally alongside the back rest, is pivotable about an axis (209; 309; 409) extending in the transverse direction of the seat, is connected to the padding carrier (202; 302; 402) of the back rest and can be locked in at least two different pivoted positions by means of a locking device (210, 212, 212′; 310, 312; 410, 412, 412′) which has, disposed at a distance from the pivot axis (209; 309; 409), two associated locking members (210, 212, 212′; 310, 312; 410, 412, 412′), of which one (210; 310; 410), upon a pivoting movement of the side member (203; 303; 403), passes by the other member (212, 212′; 312; 412, 412′) and if the locking device (210, 212, 212′; 310, 312; 410, 412, 412′) is effective, co-operates with it in selectable positions and is adapted for movement into an inoperative position by means of an actuating member (215; 315; 415), characterised in that one locking member (210; 310; 410) is connected to the padding carrier (202; 302; 402) of the back rest and the other (212, 212′; 312; 412, 412′) is connected to the padding carrier (205; 305; 405) of the side member (203; 303; 403) and in that the actuating member (215; 315; 415) is in the region of the bottom end of the padding carrier (205; 305; 405) of the side member (203; 303; 403) mounted on the padding carrier (205; 305; 405).

3. Vehicle seat, particularly a motor vehicle seat, having at least one padded side member (503) disposed laterally alongside the seat padding, pivotable about an axis (509) extending in the transverse direction of the seat, connected to the padding carrier (502) of the seat and being adapted to be locked in at least two different pivoted positions by means of a locking device (510, 510′, 512) having, disposed at a distance from the pivot axis (509), two associated locking members (510, 510′, 512) which are connected to the padding carrier (502) of the seat or the padding carrier (505) of the side member (503) and of which one is constructed as a ratchet bar (510, 510′) and, when the locking device (510, 510′, 512) is operative, engages the other locking member which constitutes a ratchet member (512), characterised in that the side member (503) is longitudinally displaceable and is connected to the pivot axis (509) in such a way as to be secured against rotation about its longitudinal axis and in that not only the one locking member which is constructed as a ratchet bar (510, 510′) but also the other locking member which constitutes a ratchet element (512) and which is capable of being engaged and disengaged by a longitudinal displacement of the side member (503), is rigidly connected to the padding carrier (502 or 505) respectively which carries it.

4. Vehicle seat, particularly a motor vehicle seat, having at least one padded side member (603) which is disposed laterally alongside the seat padding (610), is pivotable about an axis (609) extending in the transverse direction of the seat, is connected to the padding carrier (602) of the seat and is adapted to be locked at least in two different pivot positions by means of a locking device (610, 612) having, disposed at a distance from the pivot axis (609), two associated locking members (610, 612) which are connected to the padding carrier (602) of the seat or the padding carrier (605) of the side member (603) and of which one (612), upon a pivoting movement of the side member (603), passes by the other member (610), and if the locking device is operative, co-operates with it in selectable positions and is adapted for movement by an actuating member (646) into an inoperative position, characterised in that one locking member is constructed as a slider (612) adapted for translatory movement and which has at the end pointing towards the other locking member (610) at least one ratchet (645) for engagement of the other locking member (610) which is constructed as a ratchet element and on which engages the actuating member which is constructed as a leaf spring, being shaped to bulge towards the outside of the side member (603) while its other end is fixed on the padding carrier (605) of the side member (603) and moves the slider (612) into its released position when the amount of curvature of the spring diminishes.

5. Vehicle seat according to Claim 1 or 2, characterised in that a part of the actuating member (14, 15; 114, 115) which is constructed as a handle (15; 115) lies in a depression (4'; 104') of the padding (4; 104) of the side member (3; 103) which is only open towards the free end.

6. Vehicle seat according to one of Claims 1 to 5, characterised in that if one locking member is constructed as a ratchet bar (10; 110), one flank of the notches provided in the bar (10) and/or one flank of the parts (112') of the other locking element (112) which constitutes a ratchet element and which engages the notches in the bar (10), have a slope which is outside the self-jamming range.

7. Vehicle seat according to Claim 6, characterised in that the ratchets are constituted by in each case a gap between two successive sawtooth-shaped teeth (11).

8. Vehicle seat according to Claim 6 or 7, characterised in that a first arm (14) formed by the actuating member (14, 15) is pivotally connected to a second arm (12) formed by the ratchet element, the pivotability relative to each other in one direction being limited by an abutment (18), a pretensioned spring (19) being provided which seeks to hold the two arms (12, 14) in the position defined by the abutment.

9. Vehicle seat according to one of Claims 6 to 8, characterised in that one ratchet element (112) comprises a longitudinally displaceably guided ratchet pin (112, 112') adapted for movement by means of the actuating member (114, 115).

10. Vehicle seat according to one of Claims 1, 2, 5, 6 or 7, characterised in that the ratchet element is constructed as a preferably spring loaded slider (212) adapted for translatory movement.

11. Vehicle seat according to Claim 10, characterised in that the direction of movement of the slider (212) is chosen to be at least approximately radial in relation to the pivot axis (209) of the side member (203).

12. Vehicle seat according to Claim 3, characterised in that in the region of its upper end, the side member (503) is connected by the pivot axis (509) to the padding carrier (502) of the back rest, the movement upon longitudinal displacement being directed upwardly for the purpose of disengagement.

13. Vehicle seat according to Claim 4, characterised in that the ratchet element is rigidly connected to the padding carrier (602) of the seat, the slider (612) co-operating with the ratchet element being guided on the padding carrier (605) of the side member (603) for movement transversely to the path of movement of the ratchet element in relation to the slider (612).

14. Vehicle seat according to Claim 13, characterised in that the padding carrier (605) of the side member (603) is provided with a slot (641) through which passes the ratchet element which is constructed as a bolt (61) and which has a collar which engages between the edge of the slot (641) and the slider (612).

15. Vehicle seat according to one of Claims 4, 13 or 14, characterised by a thrust plate (647) located in the padding of the side member (603) and bearing on the convex side of the leaf spring (646) in such a way as to be movable upon a reduction in the curvature thereof.

**Revendications**

1. Siège de véhicule, en particulier de véhicule automobile, comportant au moins une joue latérale rembourée (3; 103) qui est disposée latéralement à côté du rembourrage du siège (1), qui est réunie au porte-rembourrage (2; 102) du siège avec possibilité de pivotement autour d'un axe (9) qui court dans la direction transversale du siège et que l'on peut bloquer en au moins deux positions de pivotement différentes au moyen d'un dispositif de verrouillage (10, 12; 110, 112, 112') qui présente deux éléments de verrouillage (10, 12; 110, 112, 112') qui sont disposés à une certaine distance de l'axe de pivotement (9), qui correspondent l'un à l'autre, qui sont réunis respectivement au porte-rembourrage (2; 102) du siège et au porte-rembourrage (5; 105) de la joue latérale (3; 103) et dont l'un (12; 112, 112'), lors d'un mouvement de pivotement de la joue latérale (3; 103), passe devant l'autre élément (10; 110), collabore avec lui dans des positions que l'on peut choisir lorsque le dispositif de verrouillage (10, 12; 110, 112, 112') est opérationnel et peut se déplacer, au moyen d'un élément de manœuvre (14, 15; 114, 115) pour venir dans une position non-opérationnelle, siège caractérisé en ce que, dans le cas d'une liaison de pivotement de la joue latérale (3; 103) avec le porte-rembourrage (2; 102) de l'assise, l'axe de pivotement est disposé au voisinage de l'extrémité arrière du porte-rembourrage (5; 105) de la joue latérale (3; 102), et en ce que l'élément de manœuvre (14, 15; 114, 115) est porté au voisinage de l'extrémité avant du porte-rembourrage (5; 105) de la joue latérale (3; 103) par le porte-rembourrage (5; 105).

2. Siège de véhicule, en particulier de véhicule automobile, comportant au moins une joue latérale rembourrée (203; 303; 403), qui est disposée latéralement à côté du dossier, qui est réunie au porte-rembourrage (202; 302; 402) du dossier avec possibilité de pivotement autour d'un axe (209; 309; 409) qui court dans la direction transversale du siège et que l'on peut bloquer dans au moins deux positions différentes de pivotement au moyen d'un dispositif de verrouillage (210, 212, 212'; 310, 312; 410, 412, 412') qui présente deux éléments de verrouillage 210, 212, 212'; 310, 312; 410, 412, 412') qui sont disposés à une certaine distance de l'axe de pivotement (209; 309; 409), qui correspondent l'un à l'autre et dont le premier (210; 310; 410), lors d'un mouvement de pivotement de la joue latérale (203; 303; 403), passe devant l'autre élément (212, 212'; 312; 412, 412'), collabore avec lui dans des positions que l'on peut choisir lorsque le dispositiv de verrouillage (210, 212, 212'; 310, 312; 410, 412, 412') est opérationnel et peut se déplacer, au moyen d'un élément de manœuvre (215; 315; 415) pour venir dans une position non opérationnelle, siège caractérisé en ce que le premier des éléments de verrouillage (210; 310; 410) est réuni au porte-rembourrage (202; 302; 402) du dossier et l'autre (212, 212'; 312; 412, 412'), au porte-rembourrage (205; 305; 405) de la joue latérale (203; 303; 403); et en ce que l'élément de manœuvre (215; 315; 415) est porté au voisinage de l'extrémité inférieure du porte-rembourrage (205; 305; 405) de la joue latérale (203; 303; 403) par le porte-rembourrage (205; 305; 405).

3. Siège de véhicule, en particulier de véhicule automobile, comportant au moins une joue latérale rembourrée (503) qui est disposée latéralement à côté du rembourrage de siège, qui est réunie au porte-rembourrage (502) du siège avec possibilité de pivotement autour d'un axe (509) qui court dans la direction transversale du siège et que l'on peut bloquer dans au moins deux positions différentes de pivotement au moyen d'un dispositif de verrouillage (501, 510', 512) qui présente deux éléments de verrouillage (510, 510', 512) disposés à une certaine distance de l'axe de pivotement (509), qui correspondent l'un à l'autre, qui sont réunis respectivement au porte-rembourrage (502) du siège et au porte-rembourrage (505) de la joue latérale (503) et dont le premier est conçu sous forme de rail de crantage (510, 510') avec lequel, lorsque le dispositif de verrouillage (510, 510', 512) est opérationnel, l'autre, un élément de verrouillage formant un élément de crantage (512), vient en prise, siège caractérisé en ce que la joue latérale (503) est mobile dans la direction de son extension longitudinale et est réunie à l'axe de pivotement (509) avec interdiction d'un pivotement autour de son axe longitudinal, et en ce que ce n'est pas seulement le premier des éléments de verrouillage, conçu comme rail de crantage (510, 510'), mais également l'autre élément de verrouillage, conçu comme élément de crantage (512) et qui peut être bloqué dans le cran et débloqué par suite d'un coulissement longitudinal de la joue latérale (503), qui sont solidarisés avec le porte-rembourrage (502 ou 505) qui les porte.

4. Siège de véhicule, en particulier de véhicule automobile, comportant au moins une joue latérale rembourrée (603) qui est disposée latéralement à côté du rembourrage du siège (610), qui est réunie au porte-rembourrage (602) du siège avec possibilité de pivotement autour d'un axe (609) courant dans la direction transversale du siège et que l'on peut bloquer dans au moins deux positions différentes de pivotement au moyen d'un dispositif de verrouillage (610, 612) qui présente deux éléments de verrouillage (610, 612) qui sont disposés à une certaine distance de l'axe de pivotement (609), qui correspondent l'un à l'autre, qui sont réunis respectivement au porte-rembourrage (602) du siège et au porte-rembourrage (605) de la joue latérale (603) et dont le premier (612), lors d'un mouvement de pivotement de la joue latérale (603), passe devant l'autre élément (610), collabore avec lui dans des positions que l'on peut choisir lorsque le dispositif de verrouillage est opérationnel et peut se déplacer au moyen d'un élément de manœuvre (646) pour venir dans une position non opérationnelle, siège caractérisé en ce que le premier des éléments de verrouillage est conçu sous forme d'un coulisseau (612) qui peut se déplacer par translation, qui présente, à son extrémité dirigée vers l'autre élément de verrouillage (610), au moins un cran d'arrêt (645) pour recevoir l'autre élément de verrouillage (610) conçu comme élément de crantage, et sur lequel vient agir l'élément de manœuvre qui est conçu comme ressort à lame (646), qui présente sa convexité en direction du côté extérieur de la joue latérale (603), qui est fixé, par son autre extrémité, au porte-rembourrage (605) de la joue latérale (603) et qui, lorsque sa convexité diminue, amène le coulisseau (612) à sa position de libération.

5. Siège de véhicule selon la revendication 1 ou 2, caractérisé en ce qu'une partie, conçue comme poignée (15, 115), de l'élément de manœuvre (14, 15. 114, 115) est placée dans une niche (4'; 104'), ouverte en direction de l'extrémité libre du rembourrage (4; 104) de la joue latérale (3; 103).

6. Siège de véhicule selon l'une des revendications 1 à 5, caractérisé en ce que, dans le cas d'une conception du premier des éléments de verrouillage sous forme de rail de crantage (10; 110), l'un des flancs des crans prévus dans le rail de crantage (10) et/ou l'un des flancs de la partie (112') et l'autre élément de verrouillage (112) formant élément de crantage, qui vient se loger dans ces crans, présentent une inclinaison située à l'extérieur de la zone d'autocoincement.

7. Siège de véhicule selon la revendication 6, caractérisé en ce que les crans sont respectivement formés par un entre-dents situé entre deux dents (11) successives, en forme de dents de scie.

8. Siège de véhicule selon la revendication 6 ou 7, caractérisé en ce qu'un premier bras (14), formé par l'élément de manœuvre (14, 15), est relié, avec possibilité de pivotement, à un second bras (12), formé par l'élément de crantage, étant précisé que la possibilité de pivotement relativ est limitée dans l'une des directions par une butée (18), et en ce qu'il est prévu un ressort précontraint (19) qui s'efforce de maintenir les deux bras (12, 14) dans la position définie par la butée.

9. Siège de véhicule selon l'une des revendications 6 à 8, caractérisé en ce que le premier des éléments de crantage (112) présente une goupille de crantage (112, 112') qui est guidée avec possibilité de déplacement longitudinal et que l'on peut déplacer au moyen de l'élément de manœuvre (114, 115).

10. Siège de véhicule selon l'une des revendications 1, 2, 5, 6 ou 7, caractérisé en ce que l'élément de crantage est conçu sous forme d'un coulisseau (212) qui peut se déplacer par translation et qui, de préférence, est sollicité par un ressort.

11. Siège de véhicule selon la revendication 10, caractérisé en ce que l'on choisit la direction de déplacement du coulisseau (212), au moins approximativement, radialement par rapport à l'axe de pivotement (209) de la joue latérale (203).

12. Siège de véhicule selon la revendication 3, caractérisé en ce que, au voisinage de son extrémité supérieure, la joue latérale (503) est réunie, par l'axe de pivotement (509), au porte-rembourrage (502) du dossier, et en ce que le mouvement, lors du déplacement longitudinal aux fins de déblocage hors du cran, est dirigé vers le haut.

13. Siège de véhicule selon la revendication 4, caractérisé en ce que l'élément de crantage est solidarisé avec le porte-rembourrage (602) du siège, et en ce que le coulisseau (612) qui collabore avec l'élément de crantage est guidé sur le porte-rembourrage (605) de la joue latérale (603) avec possibilité de se déplacer, par rapport au coulisseau (612), transversalement par rapport à la trajectoire de l'élément de crantage.

14. Siège de véhicule selon la revendication 13, caractérisé en ce que le porte-rembourrage (605) de la joue latérale (603) présente une fente (641) pour le passage de l'élément de crantage qui est conçu sous forme d'une vis (610) qui présente un collet qui se loge entre la bordure de la fente (141) et le coulisseau (612).

15. Siège de véhicule selon l'une des revendications 4, 13 ou 14, caractérisé par une plaque de pression (647) qui est disposée dans le rembourrage de la joue latérale (603) que l'on peut déplacer en appuyant contre la face convexe du ressort à lame (646) dans le but d'en réduire la convexité.

Fig.1.

Fig.3.

Fig.2

Fig.4

Fig.5.

_Fig.6._

_Fig.7._

_Fig.8._

_Fig.9._

0 082 436

Fig.10.

25

*Fig.11.*

502
509
534
519
503
504
505
505'
510
510'
512
511
504'
511
525

Fig.12.

646    XV

603

644

602    601

Fig. 13

640

641

601    605

610   644   612

605   602   646   610   612   609

602

Fig. 14

647

XVI

603

XIII

XIII

31

0 082 436

# Fig. 15

603    605    610    605

610    641

# Fig. 16

641  605  644  612

646    645

610

644